# EUROPÄISCHE PATENTSCHRIFT

(11) **EP 0 956 229 B1**
(45) Veröffentlichungstag und Bekanntmachung des Hinweises auf die Patenterteilung: **05.12.2001**
(21) Anmeldenummer: 98909338.0
(22) Anmeldetag: 29.01.1998
(51) Int. Cl.: B62D 1/06, F16B 2/24

(54) **LENKRAD MIT MINDESTENS EINEM VERKLEIDUNGSTEIL**
STEERING WHEEL WITH AT LEAST ONE COVERING ELEMENT
VOLANT DOTE D'AU MOINS UN ELEMENT DE REVETEMENT

(30) Priorität: 29.01.1997 DE 29702241 U
(43) Veröffentlichungstag der Anmeldung: 17.11.1999
(73) Patentinhaber: TAKATA - PETRI Aktiengesellschaft, 63743 Aschaffenburg (DE)
(72) Erfinder: EMENETH, Jakob, D-63773 Goldbach (DE); ROSENBERGER, Benno, D-63776 Mömbris (DE); HOCK, Karl-Walter, D-63776 Mömbris (DE)
(74) Vertreter: Bärmann, Klaus, Dipl.-Ing.
(86) Internationale Anmeldenummer: DE9800321
(87) Internationale Veröffentlichungsnummer: WO9833693

(56) Entgegenhaltungen:
- DE-A- 1 912 534
- DE-C- 4 039 138
- DE-U- 29 702 241

## Beschreibung

Die Erfindung betrifft ein Lenkrad mit mindestens einem Verkleidungsteil nach dem Oberbegriff des Anspruchs 1.

Lenkräder bestehen im allgemeinen aus einem Lenkradskelett, das mit einer Umhüllung aus Kunststoff, z.B. Polyurethan, versehen ist. Zusätzlich werden auf das Lenkrad häufig Verkleidungsteile aus formstabilem Werkstoff aufgeklebt. Diese Verkleidungsteile haben eine Schmuckfunktion, indem sie z.B. eine sichtbare Holzoberfläche aufweisen.

Der Nachteil dieser Verkleidungsteile besteht darin, daß die Herstellung der Klebeverbindung zeitaufwendig ist, da das Lenkrad solange in einer Klebevorrichtung verbleiben muß, bis der Kleber ausgehärtet ist. Da das Lenkrad Schwingungen ausgesetzt ist, ist nicht ganz auszuschließen, daß sich die Klebeverbindung löst.

Weiterhin ist aus der DE-OS 19 12 534 ein Lenkrad bekannt, dessen Kranz einen kastenartigen, im Querschnitt im wesentlichen U-förmigen metallischen Kernring aufweist, der von einem Mantel aus einem elastischen Werkstoff umgeben ist. Auf der Oberfläche dieses elastischen Werkstoffes ist ein Verkleidungsteil in Form eines Überzuges aufgeklebt, dessen Ränder zusätzlich durch die Schenkel eines als Clipselement ausgebildeten Profilstückes im Bereich des Kernringes eingeklemmt sind.

Diese Anordnung weist den Nachteil auf, daß das Clipselement in den Lenkradkranz eingreift, so daß dieser nicht den üblichen runden Querschnitt aufweisen kann, sondern den genannten U-förmigen Querschnitt aufweisen muß.

Der Erfindung liegt deshalb die Aufgabe zugrunde, eine schnelle und sichere Verbindung eines Verkleidungsteiles mit dem Lenkrad zu erzielen.

Erfindungsgemäß wird daß gemäß den Merkmalen des Anspruchs 1 erreicht.

Diese Verbindungsart weist den Vorteil auf, daß das Verkleidungsteil durch einen kurzzeitigen Druck mit dem Lenkrad verbunden werden kann. Zusätzlich kann auch in diesem Fall zwischen dem Verkleidungsteil und dem Lenkrad eine Klebestelle vorgesehen sein. Die mechanischen Verbindungselemente gewährleisten den erforderlichen Andruck des Verkleidungsteils, so daß eine Klebevorrichtung nicht mehr erforderlich ist.

In einer bevorzugten Ausführungsform ist vorgesehen, daß Clips an der Einlage des Lenkradkranzes befestigt sind und daß den Clips am Verkleidungsteil Aussparungen zugeordnet sind, in die die Clips eindrückbar sind. Die Clips sind zweckmäßig so ausgebildet, daß sie die Lenkradkranzeinlage teilweise umgreifen und daß sie in dem Bereich, der den Aussparungen am Verkleidungsteil zugeordnet ist, Abschnitte aufweisen, die zumindest teilweise nach außen aufgebogen sind. Diese aufgebogenen Abschnitte erhöhen den sicheren Halt der Clips in den Aussparungen des Verkleidungsteils.

Eine weitere Ausgestaltung sieht vor, daß die aufgebogenen Abschnitte symmetrisch zueinander verlaufende Spitzen aufweisen.

Die mechanischen Verbindungselemente erstrecken sich zweckmäßig in den unteren Teil der Lenkradumhüllung hinein und/oder diese umgreift nach oben die Clips zumindest teilweise. Hierzu werden die Verbindungelemente vor dem Aufbringen der Umhüllung auf das Lenkradskelett vorzugsweise auf die Einlage aufgesteckt, so daß sie beim Aufbringen der Umhüllung fest mit dieser verbunden werden.

Es ist weiterhin zweckmäßig, daß die Clips im unteren Teil nach außen abgebogene Enden aufweisen. Dadurch ist eine noch bessere Haftung in der Umhüllung erreichbar.

Bei einer weiteren Ausführungsform ist das clipsartige Verbindungsteil neben der Lenkradkranzeinlage angeordnet, und das Verkleidungsteil weist mindestens eine über das clipsartige Verbindungsteil greifende Spange auf. Dadurch, daß das clipsartige Verbindungsteil neben dem Skelettring angeordnet ist, kann in einfacher Weise auch ein Verkleidungsteil am Lenkrad befestigt werden, daß nur einseitig am Lenkrad verlaufen soll.

In einer bevorzugten Ausgestaltung dieser Ausführungsform ist das clipsartige Verbindungsteil auf einem Zentrierblech angeordnet, das in der Lenkradumhüllung und/oder am Skelettring befestigt ist. Dabei weist das clipsartige Verbindungsteil einerseits gegenüber dem Zentrierblech wirksame aufgebogene Abschnitte und andererseits weitere gegenüber der Spange wirksame aufgebogene Abschnitte auf.

Die Spange ist im Bereich des clipsartigen Verbindungsteils verformbar und/oder weist Öffnungen für den Eingriff der aufgebogenen Abschnitte auf. Das Zentrierblech weist ebenfalls Öffnungen für den Eingriff der aufgebogenen Abschnitte auf.

In einer Ausführungsform besteht die Spange aus Holz und weist für den Eingriff des clipsartigen Verbindungsteils einen Einsatz aus Kunststoff auf.

Die Erfindung soll in Ausführungsbeispielen anhand von Zeichnungen erläutert werden. Es zeigen:

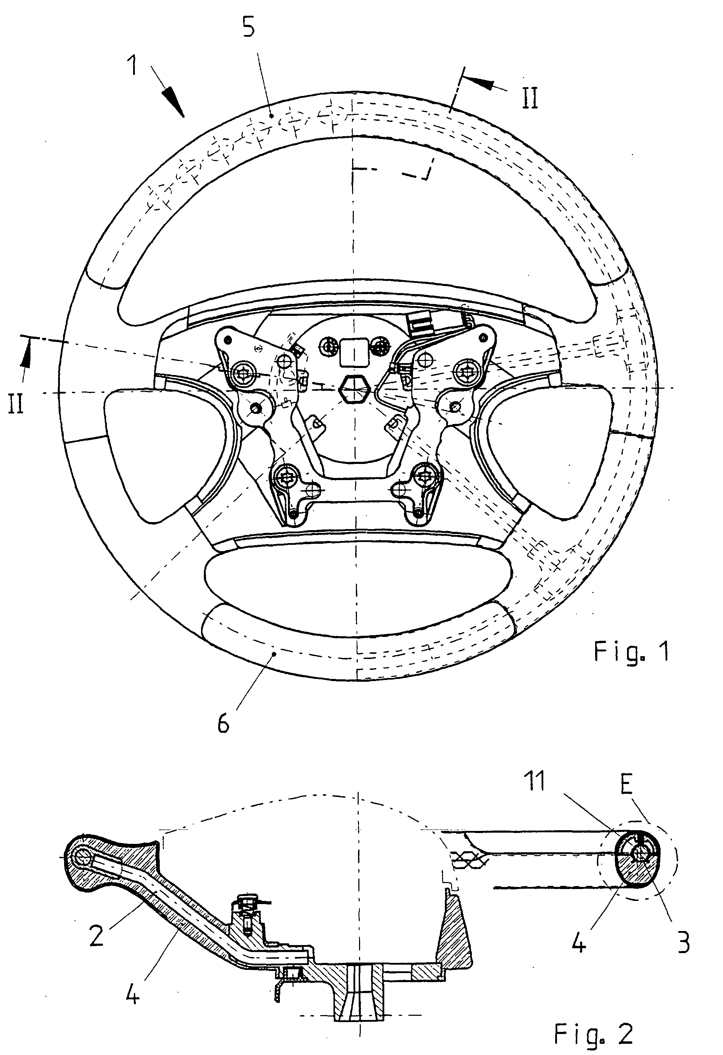

- Fig. 1: eine Draufsicht auf ein Lenkrad;
- Fig. 2: einen Schnitt II - II durch das Lenkrad nach Fig. 1;
- Fig. 3: eine vergrößerte Darstellung der Einzelheit E nach Fig. 2;
- Fig. 4: eine vergrößerte Darstellung des oberen Bereichs der Fig. 3;
- Fig. 5: den Querschnitt eines Clips;
- Fig. 6: die Seitenansicht eines Clips;
- Fig. 7: einen Schnitt II - II durch eine zweite Ausführungsform des Lenkrades nach Fig. 1;
- Fig. 8: eine vergrößerte Darstellung der Einzelheit E nach Fig. 7.

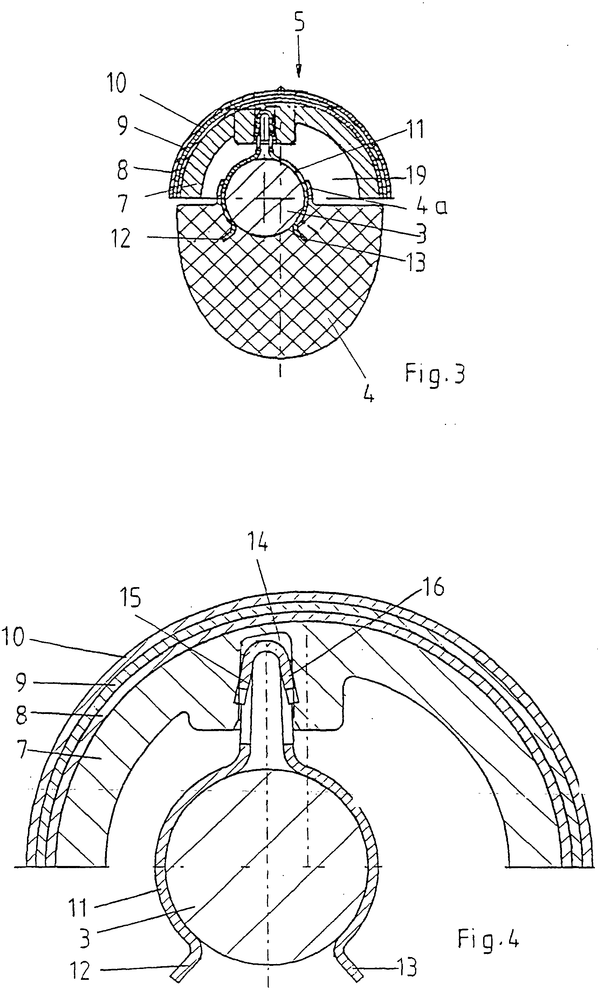

Ein Lenkrad 1, weist als wesentliche Bestandteile ein Skelett mit Speichen 2 und einer Lenkkranzeinlage 3 auf, die von einer Hülle 4, insbesondere aus PUR-Schaum umgeben sind. Auf seiner Oberseite ist das Lenkrad mit Verkleidungsteilen 5, 6 versehen. Diese erstrecken sich nicht über die gesamte Oberseite des Lenkrades sondern sind als Segmente angeordnet, wobei das Verkleidungsteil 5 länger ist als das Verkleidungsteil 6. Wie aus den Figuren 3 und 4 ersichtlich ist, bestehen die Verkleidungsteile aus einem Träger 7 aus Aluminium-Druckguß, auf den eine Holzbeschichtung aufgebracht ist. Diese besteht aus einem Unterfurnier 8 und einem Deckfurnier 9, das durch eine Polyesterschicht 10 versiegelt ist.

Auf der Lenkkranzeinlage 3 sind mehrere Clips 11 angeordnet. Die Anzahl der Clips ist von der Länge des Verkleidungsteiles abhängig. So sind dem Verkleidungsteil 5 vier Clips und dem Verkleidungsteil 6 drei Clips zugeordnet (nicht dargestellt). Die Figuren 3 bis 5 zeigen, daß die Clips im Bereich der Lenkkranzeinlage 3 einen an deren kreisförmigen Querschnitt angepaßten Querschnitt aufweisen, so daß sie die Lenkkranzeinlage teilweise umgreifen und damit auf dieser verankert sind. Beim Aufsetzen auf die Lenkkranzeinlage werden die Clips elastisch aufgebogen und legen sich dann eng an die Lenkkranzeinlage an. Die Clips weisen im unteren Teil nach außen abgebogene Enden 12, 13 auf. Diese ragen in die Hülle 4 hinein und gewährleisten zusätzlich den festen Sitz der Clips. Zusätzlich umgreift die Hülle 4 mit einem Abschnitt 4a die Clips 11.

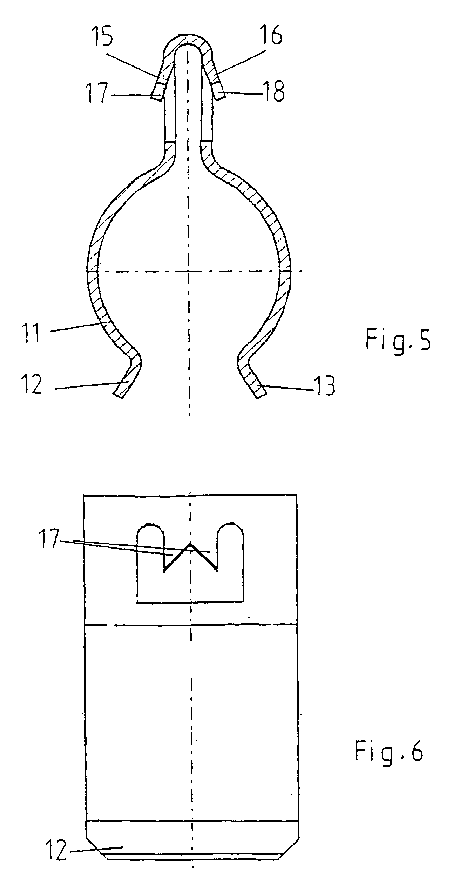

Oberhalb der Lenkkranzeinlage 3 ist jeder Clip in seinem Querschnitt an den Querschnitt je einer Aussparung 14 im Träger 7 angepaßt, in die er eingedrückt wird. Insbesondere aus den Figuren 5 und 6 ist erkennbar, daß die Clips in diesem Bereich Abschnitte 15, 16 aufweisen, die zumindest teilweise nach außen aufgebogen sind. Die aufgebogenen Abschnitte weisen symmetrisch zueinander verlaufende Spitzen 17, 18 auf. Die so geformten Abschnitte gewährleisten zusätzlich eine feste Verbindung zwischen dem Träger 7 und den Clips 11.

Zusätzlich zu der mechanischen Befestigung werden der Träger 7 und die Hülle 4 miteinander verklebt. Dabei ist ein Raum 19 mit Kleber ausgefüllt. Aus der Fig. 3 ist ersichtlich, daß die Hülle 4 schmaler ist als das Verkleidungsteil 5, so daß sie noch mit einer weiteren Schicht umhüllt werden kann, z.B. mit einer umlaufenden Lederauflage (nicht dargestellt), so daß die Hülle 4 dann die gleiche Breite wie das Verkleidungsteil 5 aufweist.

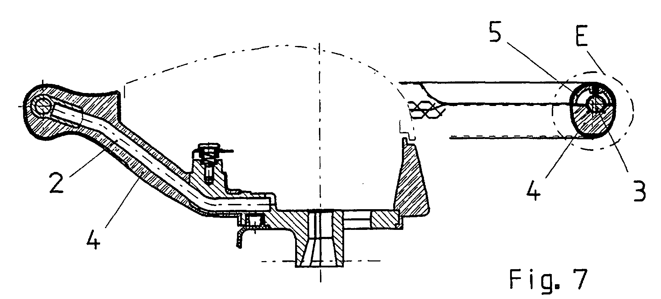

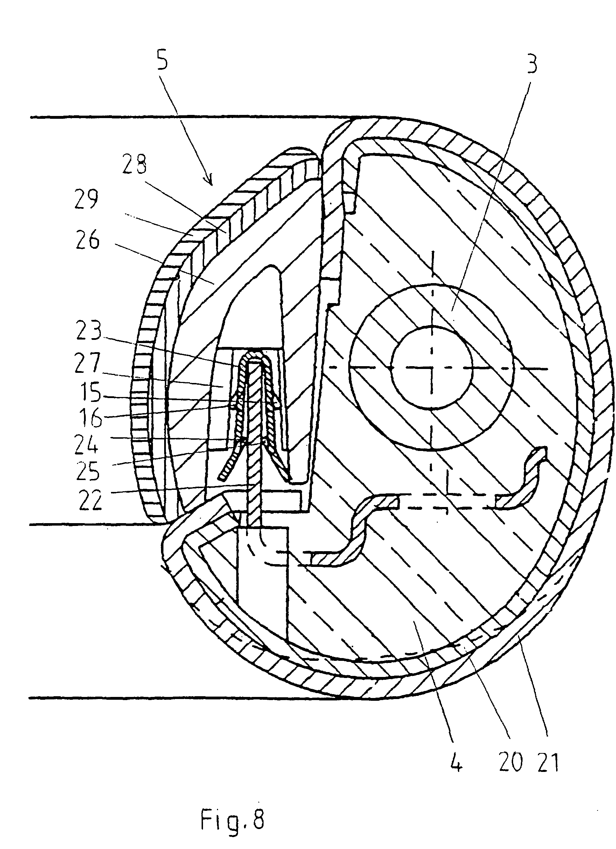

In der Fig. 7 ist ein Ausführungsbeispiel mit einem einseitig angeordneten Verkleidungsteil 5 dargestellt. Aus der vergrößerten Darstellung des Lenkradkranzes in der Fig. 8 ist ersichtlich, daß die Hülle 4 mit Weichschaum 20 überdeckt ist, der mit Leder 21 verkleidet ist. In der Darstellung des Lenkradkranzes ist links neben der Lenkradkranzeinlage 3 ein freistehendes Zentrierblech 22 angeordnet, das in der Hülle 4 befestigt ist. Dieses Zentrierblech dient der Befestigung des Verkleidungsteils 5. Hierzu sind auf dem Zentrierblech 22 Clips 23 vorgesehen, die aufgebogene Abschnitte 24, 25 aufweisen, mittels derer sie auf dem Zentrieblech 22 gehalten werden.

Das Verkleidungsteil 5 besteht aus einer Spange 26, die mit einer Kunststoffeinlage 27 versehen ist. Dieser sind aufgebogene Abschnitte 15, 16 der Clipse 23 zugeordnet, die sich beim Aufsetzen der Spange 26 in diese eindrücken oder in Öffnungen (nicht dargestellt) der Kunststoffeinlage 27 eingreifen, wodurch das Verkleidungsteil 5 am Lenkrad befestigt wird. Das Verkleidungsteil soll in der Regel eine Holzstruktur aufweisen. Deshalb ist die Spange 26 mit einem Unterfurnier 28 und einem Deckfurnier 29 verkleidet, das durch eine nicht dargestellte Polyesterschicht versiegelt ist. Es ist aber auch möglich, die Spange aus einem Holz herzustellen, dessen Oberfläche sichtbar sein soll und die Oberfläche so zu behandeln, daß kein Furnier erforderlich ist.

## Patentansprüche

1. Lenkrad mit mindestens einem Verkleidungsteil, das vorzugsweise oberhalb einer Einlage des Lenkradkranzes befestigt ist, wobei zwischen dem Lenkrad (1) und dem Verkleidungsteil (5, 6) mindestens ein clipsartiges mechanisches Verbindungselement (11, 23) vorgesehen ist,
**dadurch gekennzeichnet,**
**daß** dem clipsartigen Verbindungselement (11, 23) außerhalb der Lenkradkranzeinlage (3) am Verkleidungsteil (5, 6), eine Aussparung (14) zugeordnet ist, in die das clipsartige Verbindungselement (11, 23) eindrückbar ist.

2. Lenkrad nach Anspruch 1, **dadurch gekennzeichnet, daß** Clips (11) an der Einlage (3) des Lenkradkranzes befestigt sind und daß den Clips (11) am Verkleidungsteil (5, 6) Aussparungen (14) zugeordnet sind, in die die Clips (11) eindrückbar sind.

3. Lenkrad nach Anspruch 2, **dadurch gekennzeichnet, daß** die Clips (11) so ausgebildet sind, daß sie die Lenkradkranzeinlage (3) teilweise umgreifen und daß sie in dem Bereich, der den Aussparungen (14) am Verkleidungsteil (5, 6) zugeordnet ist, Abschnitte (15, 16) aufweisen, die zumindest teilweise nach außen aufgebogen sind.

4. Lenkrad nach Anspruch 3, **dadurch gekennzeichnet, daß** die aufgebogenen Abschnitte (15, 16) symmetrien zueinander verlaufende Spitzen (17, 13) aufweisen.

5. Lenkrad nach mindestens einem der vorhergehenden Ansprüche, **dadurch gekennzeichnet, daß** die Clips (11) im unteren Teil nach außen abgebogene Enden (12, 13) aufweisen.

6. Lenkrad nach mindestens einem der vorhergehenden Ansprüche, **dadurch gekennzeichnet, daß** sich die mechanischen Verbindungselemente (11) in den unteren Teil der Lenkradumhüllung (4) hinein erstrecken und/oder diese nach oben die mechanischen Verbindungselemente (11) zumindest teilweise umgreift.

7. Lenkrad nach mindestens einem der vorhergehenden Ansprüche, **dadurch gekennzeichnet, daß** zwischen dem Verkleidungsteil (5, 6) und dem Lenkrad (1) mindestens eine Klebestelle vorgesehen ist.

8. Lenkrad nach mindestens einem der Ansprüche 1 sowie 5 bis 7, **dadurch gekennzeichnet, daß** das clipsartige Verbindungsteil (23) neben der Lenkradkranzeinlage (3) angeordnet ist, und daß das Verkleidungsteil (5, 6) mindestens eine über das clipsartige Verbindungsteil (23) greifende Spange (26) aufweist.

9. Lenkrad nach Anspruch 8, **dadurch gekennzeichnet, daß** das clipsartige Verbindungsteil (23) auf einem Zentrierblech (22) angeordnet ist, das In der Lenkradumhüllung (4) und/oder am Skelettring (3) befestigt ist.

10. Lenkrad nach Anspruch 8 oder 9, **dadurch gekennzeichet**, daß das clipsartige Verbindungsteil (23) einerseits gegenüber dem Zentrieblech (22) wirksame aufgebogene Abschnitte (24, 25) und andererseits weitere gegenüber der Spange (26) wirksame aufgebogene Abschnitte (15, 16) aufweist.

11. Lenkrad nach mindestens einem der Ansprüche 8 bis 10, **dadurch gekennzeichnet, daß** die Spange (26) im Bereich des clipsartigen Verbindungsteils (23) verformbar ist und/oder Öffnungen für den Eingriff der aufgebogenen Abschnitte (15, 16) aufweist, und daß das Zentrierblech (22) Öffnungen für den Eingriff der aufgebogenen Abschnitte (24, 25) aufweist.

12. Lenkrad nach mindestens einem der Ansprüche 8 bis 11, **dadurch gekennzeichnet, daß** die Spange (26) aus Holz besteht.

13. Lenkrad nach Anspruch 12, **dadurch gekennzeichnet, daß** die Spange für den Eingriff des clipsartigen Verbindungsteils (23) einen Einsatz (27) aus Kunststoff aufweist.

## Claims

1. Steering wheel having at least one covering part which is preferably fixed above an insert of the steering wheel rim wherein at least one clip-like mechanical connecting element (11,23) is provided between the steering wheel (1) and the covering part (5,6)
**characterised in that**
a recess (14) is associated with the clip-like connecting element (11, 23) outside of the steering wheel rim insert (3) on the covering part (5,6) and the clip-like connecting element (11, 23) can be pressed into the recess.

2. Steering wheel according to claim 1 **characterised in that** clips (11) are fixed on the insert (3) of the steering wheel rim and that recesses (14) are associated on the covering part (5,6) with the clips (11) so that the clips (11) can be pressed therein.

3. Steering wheel according to claim 2 **characterised in that** the clips (11) are formed so that they engage partially round the steering wheel rim insert (3) and that they have in the area associated with the recesses (14) on the covering part (5,6) sections (15,16) which are bent at least partially outwards.

4. Steering wheel according to claim 3 **characterised in that** the bent-up sections (15, 16) have points (17,18) running symmetrical relative to each other.

5. Steering wheel according to at least one of the preceding claims **characterised in that** the clips (11) have in the lower part outwardly bent down ends (12,13).

6. Steering wheel according to at least one of the preceding claims **characterised in that** the mechanical connecting elements (11) extend into the lower part of the steering wheel casing (4) and/or this engages at the top at least in part round the mechanical connecting elements (11).

7. Steering wheel according to at least one of the preceding claims **characterised in that** at least one adhesive spot is provided between the covering part (5,6) and the steering wheel (1).

8. Steering wheel according to at least one of claims 1 and 5 to 7 **characterised in that** the clip-like connecting part (23) is mounted next to the steering wheel rim insert (3) and that the covering part (5,6) has at least one clasp (26) engaging over the clip-like connecting part (23).

9. Steering wheel according to claim 8 **characterised in that** the clip-like connecting part (23) is mounted on a centring plate (22) which is fixed in the steering wheel casing (4) and/or on the skeleton ring (3).

10. Steering wheel according to claim 8 or 9 **characterised in that** the clip-like connecting part (23) has on one side sections (24,25) bent up and acting opposite the centring plate (22) and on the other side further sections (15,16) bent up and acting opposite the clasp (26).

11. Steering wheel according to at least one of claims 8 to 10 **characterised in that** the clasp (26) is deformable in the area of the clip-like connecting part (23) and/or has openings for the engagement of the bent-up sections (15,16) and that the centring plate (22) has openings for the engagement of the bent-up sections (24,25).

12. Steering wheel according to at least one of claims 8 to 11 **characterised in that** the clasp (26) is made of wood.

13. Steering wheel according to claim 12 **characterised in that** the clasp has an insert (27) of plastics for engagement of the clip-like connecting part (23).

## Revendications

1. Volant comportant au moins une partie d'habillage, qui est fixée de préférence au-dessus d'un insert de la couronne du volant, au moins un élément de liaison mécanique (11, 23) en forme de pince étant prévu sur la partie d'habillage (5, 6),
**caractérisé en ce**
**qu'**à l'élément de liaison en forme de pince (11, 25) est associé, à l'extérieur de l'insert (3) de la couronne du volant, sur la partie d'habillage (5, 6), un évidement (14), dans lequel un élément de liaison en forme de pince (11, 23) peut être enfoncé.

2. Volant selon la revendication 1, **caractérisé en ce que** des pince (11) sont fixées à l'insert (3) de la couronne du volant et qu'aux pinces (11) sont associés, dans la partie d'habillage (5, 6), des évidements (14) dans lesquels les pinces (11) peuvent être enfoncées.

3. Volant selon la revendication 2, **caractérisé en ce que** les pinces (11) sont agencées de telle sorte qu'elles s'engagent partiellement autour de l'insert (3) de la couronne du volant et qu'elles comportent, dans la zone qui est associée aux évidements (14) dans la partie d'habillage (5, 6), des sections (15, 16), qui sont coudées au moins partiellement vers l'extérieur.

4. Volant selon la revendication 3, **caractérisé en ce que** les sections coudées (15, 16) possèdent des pointes (17, 18) qui s'étendent symétriquement l'une de l'autre.

5. Volant selon au moins l'une des revendications précédentes, **caractérisé en ce que** les pinces (11) possèdent, dans leur partie inférieure, des extrémités (12, 13) coudées vers l'extérieur.

6. Volant selon au moins l'une des revendications précédentes, **caractérisé en ce que** les éléments de liaison mécaniques (11) s'étendent dans la partie inférieure de l'enveloppe (4) du volant et/ou que cette dernière s'engage au moins partiellement vers le haut autour des éléments de liaison (11).

7. Volant selon au moins l'une des revendications précédentes, **caractérisé en ce qu'**au moins un point de collage est prévu entre la partie d'habillage (5, 6) et le volant (1).

8. Volant selon au moins selon l'une des revendications 1 et 5 à 7, **caractérisé en ce que** la partie de liaison en forme de pince (23) est disposée à côté de l'insert (3) de la couronne du volant et que la partie d'habillage (5, 6) possède au moins une mâchoire (26) qui s'engage par dessus l'élément de liaison en forme de pince (23).

9. Volant selon la revendication 8, **caractérisé en ce que** la partie de liaison en forme de pince (23) est disposé sur une tôle de centrage (22), qui est fixée dans l'enveloppe (4) du volant et/ou sur le squelette annulaire (3).

10. Volant selon la revendication 8 ou 9, **caractérisé en ce que** la partie de liaison en forme de pince (23) possède des sections coudées (24, 25), qui sont actives par rapport à la tôle de centrage (22) et d'autre part d'autres sections coudées (15, 16) qui agissent par rapport à la mâchoire (26).

11. Volant selon au moins l'une des revendications 8 à 10, **caractérisé en ce que** la mâchoire (26) est déformable dans la zone de la partie de liaison en forme de pince (23) et/ou comporte des ouvertures pour l'engagement des sections coudées (15, 16), et que la tôle de centrage (22) comporte des ouvertures pour l'engagement des sections coudées (24, 25).

12. Volant selon au moins l'une des revendications 8 à 11, **caractérisé en ce que** la mâchoire (26) est réalisée en bois.

13. Volant selon la revendication 12, **caractérisé en ce que** la mâchoire comporte, pour l'engagement de la partie de liaison en forme de pince (23), un insert (27) en matière plastique.
